# EUROPEAN PATENT SPECIFICATION

(11) **EP 4 118 850 B1**
(45) Date of publication and mention of the grant of the patent: **25.03.2026**
(21) Application number: 21712466.8
(22) Date of filing: 12.03.2021
(51) Int. Cl.: H04W 4/40, H04W 4/42, H04W 80/00, H04W 72/04, H04W 16/14, H04W 52/02

(54) **METHOD AND SYSTEM FOR INTERFERENCE MITIGATION AMONG COMMUNICATION NETWORKS**
VERFAHREN UND SYSTEM ZUR INTERFERENZABSCHWÄCHUNG ZWISCHEN KOMMUNIKATIONSNETZWERKEN
PROCÉDÉ ET SYSTÈME D'ATTÉNUATION D'INTERFÉRENCES ENTRE DES RÉSEAUX DE COMMUNICATION

(30) Priority: 12.03.2020 LU 101678
(43) Date of publication of application: 18.01.2023
(73) Proprietor: FBConsulting S.à r.l., 6633 Wasserbillig (LU)
(72) Inventor: BERENS, Friedbert, 6633 Wasserbillig (LU)
(74) Representative: Ipsilon Luxembourg
(86) International application number: PCT/EP2021/056315
(87) International publication number: WO 2021/180914

(56) References cited:
- US-A1- 2015 105 092
- US-A1- 2016 242 063
- US-A1- 2017 064 638

## Description

### Technical field

The invention lies in the field of communication system. In particular, the invention relates to a method and system for mitigating interference in a first communication network, caused by transmission of a second wireless communication system.

### Background of the invention

A wireless data communication network typically operates on a predetermined frequency band of the available frequency spectrum. Nodes in the network are capable of communicating data to each other whenever they are within each other's transmission range, if their respective transmit/receive antennas are tuned to said frequency bands, and if they are configured for encoding/decoding and modulating/demodulating data and signals in accordance with a previously agreed communication protocol.

It is known to use communication protocol that aim at avoiding interference between the nodes participating in a common wireless communication network. This is for example achieved by assigning pre-determined time slots to each node, as in time-division multiplexing access schemes, TDMA, by assigning pre-determined sub-frequency bands to each node, or by appropriate digital coding of the signals that are transmitted. Whenever an external source of electromagnetic radiation is transmitting within the same frequency band, or at a neighbouring frequency, while the external source does not participate in the same communication protocol, its impact on the overall available channel is quantified as noise and impairs efficient data transmissions taking place within the wireless communication network. The magnitude of the interfering noise typically depends on the transmission power of the external interfering radiation source. Transmissions on neighbouring frequencies may for example cause interference due to imperfect matching of receive filters.

However, several wireless communication network protocols use the same, or closely neighbouring frequency bands. If network nodes communicating in accordance with two distinct protocols are within their respective communication ranges, the transmissions originating at either of them are perceived as interference noise to the other. Random reflections of the transmitted electromagnetic waves, the Doppler effect in case of moving nodes, as well as the respective transmission powers are among the factors that lead to interference of two protocols even though their respective frequency ranges are close but non-overlapping.

In several applications, it is important that communications taking place in one wireless network are prioritized over those happening in other wireless networks, which potentially share some of the available communication frequency resources. Such is the case for example in security critical communication networks, which are used by public forces in emergency situations. Another application arises nowadays in vehicular communication networks, for example when automotive vehicles emit electromagnetic radiation in the vicinity of a railway track of railway station, potentially interfering with their real-time traffic management, which heavily relies on secure and time-critical reception of wireless signals.

In most cases, the requirement for spectrum sharing is only needed in specific geographical areas and during a specific time of operation of the prioritized system. It has been proposed to identify critical areas in geographical databases, to which communication networks having lower priority, and required to implement interference mitigating measures have access. However, these databases have to be continuously kept up to date in order to be efficient. Such solutions are typically ill-suited for dynamically evolving situations. Other known solutions imply modifications to existing communication protocols. It has also been proposed for a prioritized communication network to emit a static beacon signal, the reception of which allows another communication network to implement interference-mitigation measures. However, such known solutions tend to overprotect the prioritized network even though a real need for protection only arises sporadically. Further, network nodes in the lower-priority communication networks need to implement receiving means enabling them to receive and decode such beacon signals, which originate in a network using a communication protocol that is different from the communication protocol they use for data transmission with the peer nodes in their respective communication network. Known solutions therefore tend to lead to inefficient use of available spectrum resources, to increase the complexity and production costs of compliant network nodes, while at the same time neglecting aspects of reliable and secure data communication.

Patent document US 2015/0105092 A1 discloses interference management for different wireless communication technologies. According to this disclosure, a wireless device, which notifies the presence of a potentially interfering disparate technology transmitter to an access point of the communication network to which it belongs. Upon receiving this notification, the access point, which is not able to communicate with the interfering transmitter, is then able to provide a specific resource allocation to said wireless device. This resource allocation allows the wireless device to communicate on its communication network while limiting the impact of interference from the disparate technology transmitter.

Patent document US 2016/0242063 A1 discloses a method for enabling mitigation of interference between an external wireless system and a mobile communication system. In accordance with this disclosure, a mobile system detects an external wireless system actively interfering with its mobile communication system. Subsequently the mobile system enables an interference mitigation mechanism within its own mobile communication system, possibly with the help of a base station thereof.

### Technical problem to be solved

It is an objective of the invention to present a method, which overcomes at least some of the disadvantages of the prior art.

### Summary of the invention

According to a first aspect of the invention, a method for mitigating interference between a first communication network of a first type and at least one second wireless communication network of a second type is proposed according to claim 1.

The method may preferably comprise the preliminary step of:
i) at a transmitting node of the first communication network, generating a first beacon signal and broadcasting it on the first communication network.

Said detection of a predetermined network event **in** step a) may further comprise the reception of said first beacon signal.

Preferably, the first communication network may be configured for establishing a secure and trusted communication channel exclusively between its nodes, including said gateway node.

Preferably, the at least one second wireless communication network may further be configured for establishing a secure and trusted communication channel exclusively between its nodes, including said gateway node.

The gateway node's data processing unit may preferably be configured for reading data comprised in said predetermined signal received on a secure and trusted communication channel of said first communication network, and for including said data into said beacon signal, for transmission on a secure and trusted communication channel of said at least one second wireless communication network.

The predetermined event may preferably comprise the presence of a train circulating in a predetermined area in the vicinity of a node of said first communication network.

Nodes in the first communication network may preferably be configured to transmit/receive data in a first frequency range, and nodes in the at least one second wireless communication network may preferably be configured to transmit/receive data **in** at least one second frequency range, wherein said first and second frequency ranges overlap at least partially.

Preferably, said beacon signal may comprise data indicating a duration, and at step d) the receiving node of the second wireless communication network communicates with peer nodes in said communication network using said second lower transmission power level, only during said duration.

Preferably, said beacon signal may comprise data indicating a geographical area, and at step d) the receiving node of the second wireless communication network communicates with peer nodes in said second communication network using said second lower transmission power level, only if said receiving node is located within geographical area.

Preferably, the at least one second wireless communication network may comprise an ad-hoc network connecting automotive vehicles.

The first communication network may preferably comprise nodes located along a railway track.

The transmission power at said receiving node may preferably be changed by any of a change in the transmission duty-cycle, by shutting down a transmission during a predetermined amount of time, by changing the transmission data rate, or any combination of the preceding.

In accordance with another aspect of the invention, a communication system is proposed according to claim 11.

The first communication network, said at least one second wireless communication network, and said gateway node may further preferably be configured for carrying out the method in accordance with an aspect of the invention.

In accordance with yet another aspect of the invention, a computer program comprising computer readable code means is proposed, which, when run on a computer system, causes the computer system to carry out the method according to an aspect of the invention.

According to a final aspect of the invention, a computer program product is proposed. The computer program product comprises a computer readable medium on which the computer program according an aspect of the invention is stored.

The method provided by aspects of the invention allows for the provision of a communication system in which interference caused by transmission of a second wireless network within a first communication network, using the same or neighbouring frequency bands, is mitigated. The mitigation is achieved by reducing the transmit power (absolute or averaged in time) of nodes transmitting in the second wireless network, which lessens the interference noise which would impact the communications in the first network. Interference mitigation is activated only upon reception of a beacon signal originating in the first communication network, which preferably specifies the time and geographical area at/in which the interference mitigation is required so as to ensure prioritized communications. The invention proposes the use of a gateway node that is able to receive the beacon signal issued by the first network, and to communicate it to nodes in the second network, in accordance with the second network's communication protocol. The gateway node adapts the beacon signal to the transmission requirements of the second network, without changing its information content. Thereby nodes in the second network do not require hardware means that are configured for receiving a beacon signal from the first network. This reduces the complexity and production costs of the network nodes as compared to known solutions. As compared to know solutions in which a database is used to record areas in which interference mitigation is required, the proposed solution provides increased flexibility, and the ability to dynamically adapt to changing application requirements. Further, in accordance with preferred embodiments of the invention, the proposed gateway node resides in the trusted network domains of both the first and the second network. Therefore, it is able to spread the trust relationships from one network to the other: this feature allows the proposed method to seamlessly operate between two communication networks, which are managed independently as regards the issuance of authentication certificates, or for example the issuance of public/private sets of cryptographically keys.

### Brief description of the drawings

Several embodiments of the present invention are illustrated by way of figures, which do not limit the scope of the invention, wherein:
- Figure 1 shows a workflow indicating the main steps of a method in accordance with a preferred embodiment of the invention;
- Figure 2 is a schematic illustration of a communication system in accordance with a preferred embodiment of the invention;
- Figure 3 is a schematic illustration of a communication system in accordance with a preferred embodiment of the invention;
- Figure 4 is a schematic illustration of a communication system in accordance with a preferred embodiment of the invention, comprising a vehicular network.

### Detailed description of the invention

This section describes the invention in further detail based on preferred embodiments and on the figures. Similar reference numbers will be used to describe similar or the same concepts throughout different embodiments of the invention. For example, references 100, 200 and 300 respectively denote three different embodiments of a communication system in accordance with aspects of the invention, for implementing the method in accordance with aspects of the invention.

It should be noted that features described for a specific embodiment described herein may be combined with the features of other embodiments unless the contrary is explicitly mentioned. Features commonly known in the art will not be explicitly mentioned for the sake of focusing on the features that are specific to the invention.

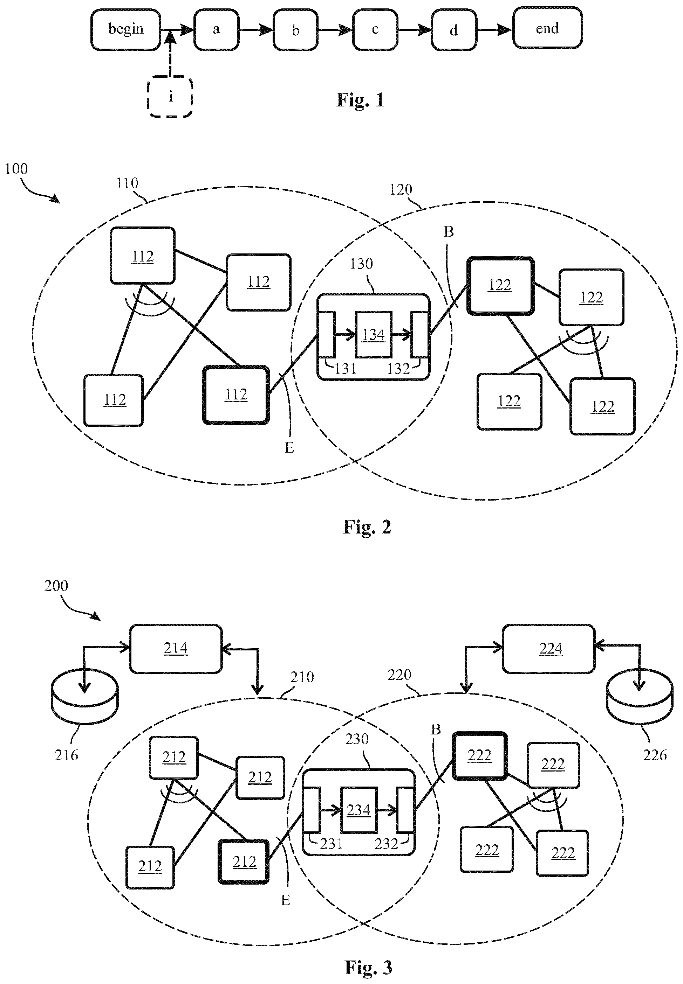

Figure 1 illustrates the main steps of a method according to a preferred embodiment of the invention, while Figure 2 provides an overview of a communication system 100 for implementing the method. The method aims a reducing, or mitigating, interference caused by a second wireless communication network 120, within a first communication network 110. Both networks comprise network nodes. A node is a communication device comprising a receive/transmit unit having a receive/transmit antenna, a data processing unit operatively coupled to a memory element, such as a Hard Disk Drive, HDD, Solid State Drive, SDD, or a volatile memory element such as a Random-Access Memory, RAM, module. A node may be a dedicated communication device for the purposes of the proposed method, or it may comprise a programmed personal computer, smartphone, or a communication module with a road or rail vehicle.

A gateway or proxy node 130 features a data reception unit 131 for receiving data that was transmitted from peer nodes 112 of the first communication network. The reception unit 131 may for example comprise a wireless networking interface, an appropriately configured antenna for receiving electromagnetic radiation in the first frequency range used within the first communication network, and a demodulating/decoding unit, which may for example be implemented using a dedicated semiconductor chip, or by an appropriately programmed data processing unit. The gateway node thus acts as a node among peers 112 in the first network 110. The gateway node 130 further features a data transmission unit 132 that is configured for transmitting data in the second wireless communication network 120. The transmission unit 132 may for example comprise a wireless networking interface, an appropriately configured antenna for transmitting electromagnetic radiation in the second frequency range used within the second communication network, and a modulating/coding unit, which may for example be implemented using a dedicated semiconductor chip, or by an appropriately programmed data processing unit. The first and second frequency ranges may be the same, they may overlap, or they may be closely neighbouring frequency ranges within the frequency spectrum. A data processing unit 134 of the gateway node 130 is configured, for example using an appropriate software code, to read the data that is contained in data units, such as packets, received from the first network 110 using the data reception unit 131. It is capable of comparing the received data to a predetermined event pattern, which is stored in a non-illustrated memory element, to which the data processing unit 134 has read access. If the received data conforms to the event pattern, it concludes to the detection of a corresponding predetermined network event E within the first network 110. This corresponds to step a) of the proposed method. Optionally, the gateway unit may further comprise a non-illustrated data receiving unit that is configured for receiving data from the second wireless communication network 120, without departing from the scope of the present invention. This allows the gateway node for example to evaluate the number of peer nodes that are also transmitting within its own transmission range, which may have an impact on the transmission power level that is adopted.

Upon detection of the predetermined network event E, the data processing unit 134 proceeds with generating a beacon signal, which is then transmitted to at least one receiving node 122 of the second wireless communication network 120. The transmission may be of the broadcast type, or the nodes 122 of the network may relay the received signal to peer nodes. This corresponds to step b) of the proposed method.

During step c) of the proposed method, a receiving node 122, which is a node of the second wireless communication network 120 that is within the gateway node's transmission range, receives the beacon signal B. Upon reception, it changes its transmission power for communication with peer nodes 122 in the second wireless communication network from a first level to a second lower level. At step d), the receiving node 122 initiates a communication with any of the peer nodes in the second wireless communication network, using the adapted second lower transmission power level.

The network event E that occurred int he first network **110** is thus relayed and/or translated as a beacon signal B towards the second wireless communication network 120. Communications in the first communication network are prioritized and safeguarded against communications in the second wireless communication 120 network, which may otherwise have interfered with communications in the first communication network. The network event E signals the need to prioritize communications on the first communication network over communications on the second wireless communication

The network event E may be a beacon signal itself, which has been generated by a node in of the first communication network **110** upon detection of a predetermined local event. Alternatively, the predetermined network event E may comprise the reception of a data packet, using the gateway node's data reception means for receiving data on the first communication network, in which the detection of a sensed real-world event is indicated. This may for example, and without limiting the invention to these examples, comprise the detection of a predetermined motion by a motion sensor coupled to any of the network nodes 112, the detection of a visual pattern by a camera sensor couple to any of the network nodes 112, or a the detection of a complex event comprising multiple sensed event modalities. In any case, the predetermined event warrants an impending urgent communication within the first network 110, which should not be impeded by interference coming from a second wireless network 120, such as the one depicted in Figure 2. The network event E is in particular independent to any notification or data transmission happening on the second wireless communication network, as it is internal to the first communication network. The network event E may alternatively be generated at the gateway node itself.

**In** accordance with an embodiment of the invention, the beacon signal B may comprise a data packet of a predetermined type, which is preferably indicated in a header of the data packet. Upon reception of beacon-type packet, any node 122 of the second wireless communication network is capable of identifying the beacon signal as such. The receiving node 122 may be pre-configured to implement a specific interference mitigation measure upon reception of a beacon-type packet. The beacon signal may further be transmitted on a specific predetermined frequency that is known in the second network 120.

Alternatively, and in accordance with a preferred embodiment of the invention, the beacon signal B may explicitly signal further information to a receiving node 122 within the second wireless communication network 120. This information may for example comprise an indication of a specific interference mitigation measure to be implemented, a geographical area in which the beacon signal should be considered, a time duration for which the beacon signal should be considered, or a combination of any items in this non-exhaustive list. Upon reception of such an explicit beacon signal B, the receiving node is in that case configured to implement the signalled specific interference mitigation measure, preferably only if its local time (clocks are supposed to be synchronised throughout the communication system 100) corresponds to the signalled time duration, and preferably only if the node's location is within the signalled geographical area. To that effect, the nodes 122 may comprise a geolocation module such as a Global Positioning System, GPS, receiver, or a static geographical indication stored within a local memory element.

As previously mentioned, the interference mitigating measure that are implemented by the nodes 122 of the second wireless communication network 120 and/or signalled within the beacon signal B that is generated by the gateway node 130, comprises a measure that adapts the transmission power of the node 122 from a first level to a second lower level, for further data transmission, for as long as the beacon signal is valid or in force.

A mitigating measure may comprise a reduction of the transmission duty cycle of any receiving node 122 or a set of nodes 122. Data is transmitted in periodic cycles, wherein during one period, only part of the available transmission slot is used. For example, a cycle of 50% implies that data is transmitted at the full available transmission power during half of the available time, whereas no transmission is performed during the other half of the available time. Thus, a reduction of the duty-cycle leads to a reduction of the average transmission power from a first level to a second lower power level. At the same time, the probability of creating interference in the first network 110 is reduced by reducing the duty cycle, as the periods in which no transmission is made, and in which no interference can be caused within each transmission cycle become longer.

A mitigation measure may comprise a reduction of the maximum transmission power of a node 122. While the duty cycle remains constant, the absolute transmission power that is used during the active part of each transmission period is reduced. A reduction of the maximum transmission power therefor lowers the transmission power from a first level to a second lower power level. A lower absolute or maximum transmission power reduces the transmission range of the node 122, and thereby reduces the geographical area in which it may cause any interference to the first network **110.**

As an alternative measure, any transmission of a node 122 may be shut down for a predetermined or signalled amount of time once a beacon signal is received.

Figure 3 illustrates another preferred embodiment of a communication system 200 in accordance with the invention. The description of specific concepts that has been made in the context of the previous embodiment remains applicable to the present embodiment.

As previously stated, the method in accordance with embodiments of the invention aims at reducing, or mitigating, interference caused by a second wireless communication network 220, within a first communication network 210. Both networks comprise network nodes. A gateway or proxy node 230 features a data reception unit 231 for receiving data that was transmitted from peer nodes 212 of the first communication network. The gateway node thus acts as a node among peers 212 in the first network 210. The gateway node 230 further features a data transmission unit 232 that is configured for transmitting data in the second wireless communication network 220. The first and second frequency ranges used for communication in the first and second networks 210, 220 may be the same, they may overlap, or they may be closely neighbouring frequency ranges within the frequency spectrum.

The first communication network 210 is configured for establishing a secure and trusted communication channel exclusively between its nodes 212, including said gateway node 230, while the second wireless communication network 220 is further configured for establishing a secure and trusted communication channel exclusively between its nodes 222, including said gateway node 230. By way of a non-limiting example this is achieved by using a dedicated certification authority CA, 214 for the first network 210 and another dedicated certification authority CA 224 for the second network. The CA 214 has access to a structured memory element, such as a secure database 216 in which authentication certificates for each previously identified and registered network node 212, 230 of the first network 210 are stored. A node certificate may for example comprise data identifying the node, such as a unique identifier, and a public key of a private/public cryptographically generated encryption key pair, which is associated with the node. Using the certificates granted by CA 214, the nodes are capable of establishing secure and trusted communication channels within the first network 210. The details of communicating using public key cryptographic methods are well known in the art and will not be explained in the context of the present invention. The CA 224 has access to a structured memory element, such as a secure database 226 in which authentication certificates for each previously identified and registered network node 222, 230 of the second network 220 are stored. A node certificate may for example comprise data identifying the node, such as a unique identifier, and a public key of a private/public cryptographically generated encryption key pair, which is associated with the node. Using the certificates granted by CA 212, the nodes are capable of establishing secure and trusted communication channels within the second network 220.

A data processing unit 234 of the gateway node 230 is configured, for example using an appropriate software code, to read and decipher the data that is contained in data units, such as packets, received from the first network 210 using the data reception unit 231. It is capable of comparing the received data to a predetermined event pattern, which is stored in a non-illustrated memory element, to which the data processing unit 234 has read access. If the received data conforms to the event pattern, it concludes to the detection of a corresponding predetermined network event E within the first network 210. This corresponds to step a) of the proposed method.

Upon detection or local generation of the predetermined network event E, transmitted securely on the first communication network, the data processing unit 234 proceeds with generating a beacon signal B, which is then securely transmitted to at least one receiving node 222 of the second wireless communication network 220. This corresponds to step b) of the proposed method.

During step c) of the proposed method, a receiving node 222, which is a node of the second wireless communication network 220 that is within the gateway node's transmission range, receives the beacon signal B. Upon reception, it changes its transmission power for communication with peer nodes 222 from a first level to a second lower level. At step d), the receiving node 222 initiates a communication with any of the peer nodes in the second wireless communication network, using the adapted second lower transmission power level.

The certification of the gateway node 230 by both CA's 213 and 214 enables it to spread the trust from one network to the other, and vice-versa. Independently managed networks 210, 220 become interoperable on a trusted basis for the sake of beacon signalling, while only a single node 230 needs to be certified by both certification authorities 213 and 214. This allows for easy adoption of the proposed system and facilitates the management of both networks 210, 220.

The proposed method provides secure and trustworthy sharing support between different networks operating in the same or similar frequency spectrum band and geographical area. The signalling information needs to be transmitted in a trustworthy and secure way in order to guarantee the proper usage of the sharing mechanisms. The proposed invention allows a mitigation operation by receiving a signal from the system/network to be protected and sending out a secured protection message using a signal of the system/network that has to protect the prioritized system.

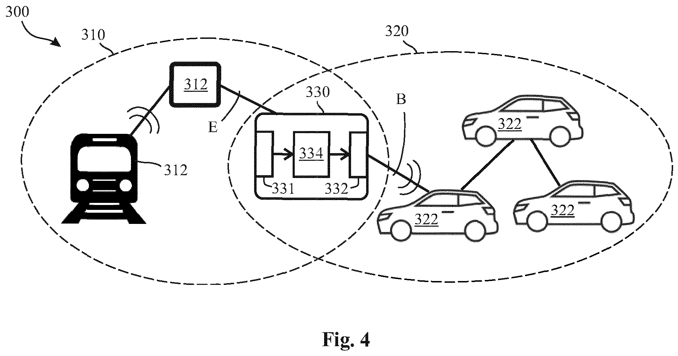

Figure 4 illustrates another preferred embodiment of a communication system in accordance with the invention. The description of specific concepts that has been made in the context of the previous embodiments remains applicable to the present embodiment.

As previously stated, the method in accordance with embodiments of the invention aims a reducing, or mitigating, interference caused by a second wireless communication network 320, within a first communication network 310. Both networks comprise network nodes.

A gateway or proxy node 330 features a data reception unit 331 for receiving data that was transmitted from peer nodes 312 of the first communication network. The gateway node thus acts as a node among peers 312 in the first network 310. The gateway node 330 further features a data transmission unit 332 that is configured for transmitting data in the second wireless communication network 320, and a non-illustrated data receiving unit for receiving data in said network. A data processing unit 334 of the gateway node 330 is configured, for example using an appropriate software code, to read the data that is contained in data units, such as packets, received from the first network 310 using the data reception unit 331. It is capable of comparing the data received on the first network to a predetermined event pattern, which is stored in a non-illustrated memory element, to which the data processing unit 334 has read access. If the received data conforms to the event pattern, it concludes to the detection of a corresponding predetermined network event E within the first network 310. This corresponds to step a) of the proposed method. Depending on the type of the second wireless network, it is necessary for the gateway node 330 to comprise a data receiving unit for receiving data in the second wireless network. This is notably the case for a wireless network implementing a Carrier Sense Multiple Access scheme with Collision Avoidance, CSMA/CA. An example of such a network type includes a WiFi^{™} compliant network. The gateway node is in any case configured so as to be able to connect to the second wireless network, irrespective of the type of network and its specific communication protocol.

Upon detection of the predetermined network event E, the data processing unit 334 proceeds with generating a beacon signal, which is then transmitted to at least one receiving node 322 of the second wireless communication network 320. This corresponds to step b) of the proposed method.

During step c) of the proposed method, a receiving node 322, which is a node of the second wireless communication network 320 that is within the gateway node's transmission range, receives the beacon signal B. Upon reception, it changes its transmission power for communication with its peer nodes 322 from a first level to a second lower level. At step d), the receiving node 322 initiates a communication with any of the peer nodes in the second wireless communication network, using the adapted second lower transmission power level.

**In** accordance with the present embodiment, the first communication network 310 comprises network nodes such as wireless base stations 312 placed along a railway track, for communicating signalling information to and from trains circulating on the tracks. A train may actively notify its presence to the peer nodes of the first communication network 310 by emitting a first beacon signal, which will eventually be propagated to the gateway node 330. Alternatively, a sensor equipment that is coupled to a network node 312 may detect a real world event, such as the detection of the presence of the train, and generate corresponding network event E within the first network 310.

Alternatively, any of the wireless base stations 312 placed along a railway track, or the train itself may be further configured for implementing the functionality of the gateway node 330 as described herein.

Upon notification of the train's presence, on the track, i.e. upon detection of the network event E, the gateway node 330 generates the beacon signal toward the second wireless network 320. The second wireless network comprises a vehicular network enabling communication between automotive vehicles circulating on a road in the immediate vicinity of the railway track. By using the signalled interference measure that have been described in the context of the previous embodiments, the vehicular network 320 becomes less likely to interfere with the first network, which increases the security within the railway network 310. The latter depends on correct reception of critical signals within the railway network 310. The mitigation measures are only implemented when they are necessary with respect to the geographic location of the nodes 322 and with respect to time. The gateway node 330 acts as a trusted interface between both networks 310, 320 while the network nodes 322 can rely on standard equipment, without being able to interface with nodes of the first network 310.

In all previous embodiments the nodes 122, 222, 322 of the second network 120, 220, 320 may preferably comprise WiFi^{™} or Bluetooth^{™} compliant access points or base stations, which reduce their respective transmit power whenever the beacon B is notifies by the gateway node.

A skilled person will be enabled by the present description and the accompanying figures to provide a computer program code for implementing the described functionalities without undue burden and without exercising inventive skill.

It should be understood that the detailed description of specific preferred embodiments is given by way of illustration only, since various changes and modifications within the scope of the invention will be apparent to the person skilled in the art. The scope of protection is defined by the following set of claims.

## Claims

1. Method for mitigating interference between a first communication network (110, 210, 310) of a first type and at least one second wireless communication network (120, 220, 320) of a second type, comprising the steps of:
a) at a gateway node (130, 230, 330) comprising a data reception unit (131, 231, 331) for receiving data in said first communication network and a data transmission unit (132, 232, 332) for transmitting data in said at least one second wireless communication network,
detecting, using a data processing unit (134, 234, 334), a predetermined network event (E) within said first communication network (110, 210, 310), wherein the predetermined network event (E) indicates an impending prioritized communication within the first communication network (110, 210), which should not be impeded by interference coming from a second wireless network (120, 220), wherein the detection comprises the reception of a predetermined signal on said first communication network (110, 210, 310);
b) at the gateway node, generating a beacon signal (B) upon said detection, and transmitting it to at least one receiving node (122, 222, 322) of the at least one second wireless communication network (120, 220, 320);
c) at said receiving node, comprising no data reception means for receiving data in said first communication network, changing the transmission power for communicating with peer nodes in the second wireless communication network (120, 220, 320) from a first level to a second lower level, upon reception of said beacon signal;
d) at said receiving node, communicating with any of the peer nodes in said second wireless communication network using said second lower transmission power level.

2. The method according to claim 1, comprising the preliminary step of:
i) at a transmitting node (112, 212, 312) of the first communication network (110, 210, 310), generating a first beacon signal and broadcasting it on the first communication network;
and wherein said detection of a predetermined network event (E) in step a) comprises the reception of said first beacon signal.

3. The method according to any of claims 1 or 2, wherein the first communication network (210) is configured for establishing a secure and trusted communication channel exclusively between its nodes (212), including said gateway node (230) and
wherein the at least one second wireless communication network (220) is further configured for establishing a secure and trusted communication channel exclusively between its nodes (222), including said gateway node (230).

4. The method according to any of claims 2 or 3, wherein the gateway node's data processing unit (134, 234, 334) is configured for reading data comprised in said predetermined signal received on a secure and trusted communication channel of said first communication network (110, 210, 310), and for including said data into said beacon signal (B), for transmission on a secure and trusted communication channel of said at least one second wireless communication network (120, 220, 320).

5. The method according to any of claims 1 to 4, wherein said predetermined event signals the presence of a train circulating in a predetermined area in the vicinity of a node (312) of said first communication network (310).

6. The method according to any of claims 1 to 5, wherein nodes in the first communication network (110, 210, 310) are configured to transmit/receive data in a first frequency range, wherein nodes in the at least one second wireless communication network (120, 220, 320) are configured to transmit/receive data in at least one second frequency range, and wherein said first and second frequency ranges overlap at least partially.

7. The method according to any of claims 1 to 6, wherein said beacon signal (B) comprises data indicating a duration, and wherein at step d) the receiving node (122, 222, 322) of the second wireless communication network communicates with peer nodes in said communication network (120, 220, 320) using said second lower transmission power level, only during said duration, and/or wherein said beacon signal (B) comprises data indicating a geographical area, and wherein at step d) the receiving node (122, 222, 322) of the second wireless communication network communicates with peer nodes in said second communication network (120, 220, 320) using said second lower transmission power level, only if said receiving node is located within geographical area.

8. The method according to any of claims 1 to 7, wherein said at least one second wireless communication network comprises an ad-hoc network connecting automotive vehicles.

9. The method according to any of claims 1 to 8, wherein said first communication network comprises nodes located along a railway track.

10. The method according to any of claims 1 to 9 wherein the transmission power at said receiving node (122, 222, 322) is changed by any of a change in the transmission duty-cycle, by shutting down a transmission during a predetermined amount of time, by changing the transmission data rate, or any combination of the preceding.

11. A communication system (100, 200, 300) comprising a first communication network (110, 210, 310) of a first type, at least one second wireless communication network (120, 220, 320) of a second type, and a gateway node (130, 230, 330) comprising a data reception unit (131, 231, 331) for receiving data in said first communication network and a data transmission unit (132, 232, 332) for transmitting data in said at least one second communication network, wherein a data processing unit (134, 234, 334) of said gateway node is configured for detecting a predetermined network event (E) within said first communication network (110, 210, 310), wherein the predetermined network event (E) indicates an impending prioritized communication within the first communication network (110, 210), which should not be impeded by interference coming from a second wireless network (120, 220), wherein the detection comprises the reception of a predetermined signal on said first communication network (110, 210, 310), and for subsequently generating a beacon signal (B) and transmitting it to at least one receiving node of the at least one second wireless communication network (120, 220, 320), and wherein said receiving node (122, 222, 322), comprising no data reception means for receiving data in said first communication network, is configured for changing the transmission power for communicating with any of the peer nodes in the second wireless communication network (120, 220, 320) from a first level to a second lower level, upon reception of said beacon signal.

12. The communication system according to claim 11, wherein said first communication network (110, 210, 310), said at least one second wireless communication network (120, 220, 320), and said gateway node (130, 230, 330) are further configured for carrying out the method in accordance with any of claims 2 to 10.

13. A computer program comprising computer readable code means, which, when run on a computer system, causes the computer system to carry out the method according to any of claims 1 to 10.

14. A computer program product comprising a computer readable medium on which the computer program according to claim 13 is stored.

## Patentansprüche

1. Verfahren zur Minderung von Störungen zwischen einem ersten Kommunikationsnetzwerk (110, 210, 310) eines ersten Typs und mindestens einem zweiten drahtlosen Kommunikationsnetzwerk (120, 220, 320) eines zweiten Typs, umfassend die Schritte:
a) an einem Gateway-Knoten (130, 230, 330) umfassend eine Datenempfangseinheit (131, 231, 331) zum Empfangen von Daten in diesem ersten Kommunikationsnetzwerk und eine Datenübertragungseinheit (132, 232, 332) zum Übertragen von Daten in diesem mindestens einen zweiten drahtlosen Kommunikationsnetzwerk,
Erkennen eines vordefinierten Netzereignisses (E) unter Verwendung einer Datenverarbeitungseinheit (134, 234, 334) innerhalb dieses ersten Kommunikationsnetzwerks (110, 210, 310), wobei das vordefinierte Netzereignis (E) eine bevorstehende priorisierte Kommunikation innerhalb des ersten Kommunikationsnetzwerks (110, 210) anzeigt, die nicht durch Störungen aus einem zweiten drahtlosen Netzwerk (120, 220) beeinträchtigt werden darf, wobei das Erkennen den Empfang eines vordefinierten Signals auf diesem ersten Kommunikationsnetzwerk (110, 210, 310) umfasst;
b) am Gateway-Knoten, erzeugen eines Beacon-Signals (B) nach diesem Erkennen, und Übertragen an mindestens einen Empfangsknoten (122, 222, 322) des mindestens einen zweiten drahtlosen Kommunikationsnetzwerks (120, 220, 320);
c) an diesem Empfangsknoten, der keine Datenempfangsmittel zum Empfangen von Daten in diesem ersten Kommunikationsnetzwerk umfasst, ändern der Übertragungsleistung für die Kommunikation mit Peer-Knoten im zweiten drahtlosen Kommunikationsnetzwerk (120, 220, 320) von einem ersten Niveau auf ein zweites niedrigeres Niveau nach Empfang dieses Beacon-Signals;
d) an diesem Empfangsknoten Kommunikation mit jedem der Peer-Knoten in diesem zweiten drahtlosen Kommunikationsnetzwerk unter Verwendung dieses zweiten niedrigeren Übertragungsleistungsniveaus.

2. Das Verfahren nach Anspruch 1, umfassend den vorbereitenden Schritt von:
i) an einem Sendeknoten (112, 212, 312) des ersten Kommunikationsnetzwerks (110, 210, 310) ein erstes Beacon-Signal erzeugen und dieses im ersten Kommunikationsnetzwerk übertragen;
und wobei dieses Erkennen eines vordefinierten Netzereignisses (E) in Schritt a) den Empfang dieses ersten Beacon-Signals umfasst.

3. Das Verfahren nach einem der Ansprüche 1 oder 2, wobei das erste Kommunikationsnetzwerk (210) konfiguriert ist, um einen sicheren und vertrauenswürdigen Kommunikationskanal ausschließlich zwischen seinen Knoten (212), einschließlich dieses Gateway-Knotens (230), zu etablieren und wobei das mindestens eine zweite drahtlose Kommunikationsnetzwerk (220) weiter konfiguriert ist, um einen sicheren und vertrauenswürdigen Kommunikationskanal ausschließlich zwischen seinen Knoten (222), einschließlich dieses Gateway-Knotens (230), zu etablieren.

4. Verfahren nach einem der Ansprüche 2 oder 3, wobei die Datenverarbeitungseinheit des Gateway-Knotens (134, 234, 334) konfiguriert ist, um Daten, die in dem vordefinierten Signal enthalten sind, auf einem sicheren und vertrauenswürdigen Kommunikationskanal des ersten Kommunikationsnetzwerks (110, 210, 310) zu lesen und um die Daten in das Beacon-Signal (B) zu integrieren, zur Übertragung auf einem sicheren und vertrauenswürdigen Kommunikationskanal des mindestens einen zweiten drahtlosen Kommunikationsnetzwerks (120, 220, 320).

5. Verfahren nach einem der Ansprüche 1 bis 4, wobei das vordefinierte Ereignis die Anwesenheit eines Zuges signalisiert, der sich in einem vordefinierten Bereich in der Nähe eines Knotens (312) des ersten Kommunikationsnetzwerks (310) bewegt.

6. Verfahren nach einem der Ansprüche 1 bis 5, wobei Knoten im ersten Kommunikationsnetzwerk (110, 210, 310) konfiguriert sind, Daten in einem ersten Frequenzbereich zu übertragen/empfangen, wobei Knoten im mindestens einen zweiten drahtlosen Kommunikationsnetzwerk (120, 220, 320) konfiguriert sind, Daten in mindestens einem zweiten Frequenzbereich zu übertragen/empfangen, und wobei die ersten und zweiten Frequenzbereiche sich mindestens teilweise überlappen.

7. Verfahren nach einem der Ansprüche 1 bis 6, wobei das Beacon-Signal (B) Daten enthält, die eine Dauer anzeigen, und wobei in Schritt d) der Empfangsknoten (122, 222, 322) des zweiten drahtlosen Kommunikationsnetzwerks während dieser Dauer mit Peer-Knoten in diesem Kommunikationsnetzwerk (120, 220, 320) unter Verwendung dieses zweiten niedrigeren Übertragungsleistungsniveaus kommuniziert und/oder wobei das Beacon-Signal (B) Daten enthält, die ein geografisches Gebiet anzeigen und wobei in Schritt d) der Empfangsknoten (122, 222, 322) des zweiten drahtlosen Kommunikationsnetzwerks mit Peer-Knoten in diesem zweiten Kommunikationsnetzwerk (120, 220, 320) unter Verwendung dieses zweiten niedrigeren Übertragungsleistungsniveaus kommuniziert, nur wenn sich der Empfangsknoten im geografischen Gebiet befindet.

8. Verfahren nach einem der Ansprüche 1 bis 7, wobei das mindestens eine zweite drahtlose Kommunikationsnetzwerk ein Ad-hoc-Netzwerk umfasst, das Automobilfahrzeuge verbindet.

9. Verfahren nach einem der Ansprüche 1 bis 8, wobei das erste Kommunikationsnetzwerk Knoten umfasst, die entlang einer Eisenbahnstrecke angeordnet sind.

10. Verfahren nach einem der Ansprüche 1 bis 9, wobei die Übertragungsleistung am Empfangsknoten (122, 222, 322) durch eine Änderung des Übertragungstastverhältnisses, durch Abschaltung einer Übertragung während eines vordefinierten Zeitraums, durch Änderung der Übertragungsdatenrate oder einer Kombination der vorhergehenden geändert wird.

11. Ein Kommunikationssystem (100, 200, 300) umfassend ein erstes Kommunikationsnetzwerk (110, 210, 310) eines ersten Typs, mindestens ein zweites drahtloses Kommunikationsnetzwerk (120, 220, 320) eines zweiten Typs, und einen Gateway-Knoten (130, 230, 330) umfassend eine Datenempfangseinheit (131, 231, 331) zum Empfangen von Daten in dem ersten Kommunikationsnetzwerk und eine Datenübertragungseinheit (132, 232, 332) zum Übertragen von Daten in dem mindestens einen zweiten drahtlosen Kommunikationsnetzwerk, wobei eine Datenverarbeitungseinheit (134, 234, 334) des Gateway-Knotens konfiguriert ist, um ein vordefiniertes Netzereignis (E) innerhalb des ersten Kommunikationsnetzwerks (110, 210, 310) zu erkennen, wobei das vordefinierte Netzereignis (E) eine bevorstehende priorisierte Kommunikation innerhalb des ersten Kommunikationsnetzwerks (110, 210) anzeigt, die nicht durch Störungen aus einem zweiten drahtlosen Netzwerk (120, 220) beeinträchtigt werden darf, wobei das Erkennen den Empfang eines vordefinierten Signals auf dem ersten Kommunikationsnetzwerk (110, 210, 310) umfasst, und um anschließend ein Beacon-Signal (B) zu erzeugen und dieses an mindestens einen Empfangsknoten des mindestens einen zweiten drahtlosen Kommunikationsnetzwerks (120, 220, 320) zu übertragen, und wobei der Empfangsknoten (122, 222, 322), der keine Datenempfangsmittel zum Empfangen von Daten in dem ersten Kommunikationsnetzwerk umfasst, konfiguriert ist, die Übertragungsleistung für die Kommunikation mit Peer-Knoten im zweiten drahtlosen Kommunikationsnetzwerk (120, 220, 320) von einem ersten Niveau auf ein zweites niedrigeres Niveau nach Empfang des Beacon-Signals zu ändern.

12. Das Kommunikationssystem gemäß Anspruch 11, wobei das erste Kommunikationsnetzwerk (110, 210, 310), das mindestens ein zweite drahtlose Kommunikationsnetzwerk (120, 220, 320) und der Gateway-Knoten (130, 230, 330) weiter konfiguriert sind, um das Verfahren gemäß einem der Ansprüche 2 bis 10 durchzuführen.

13. Ein Computerprogramm, umfassend computerlesbare Codemittel, die, wenn sie auf einem Computersystem ausgeführt werden, das Computersystem veranlassen, das Verfahren gemäß einem der Ansprüche 1 bis 10 durchzuführen.

14. Ein Computerprogrammprodukt, umfassend ein computerlesbares Medium, auf dem das Computerprogramm gemäß Anspruch 13 gespeichert ist.

## Revendications

1. Méthode pour atténuer l'interférence entre un premier réseau de communication (110, 210, 310) d'un premier type et au moins un second réseau de communication sans fil (120, 220, 320) d'un second type, comprenant les étapes de :
a) à un nœud de passerelle (130, 230, 330) comprenant une unité de réception de données (131, 231, 331) pour recevoir des données dans ledit premier réseau de communication et une unité de transmission de données (132, 232, 332) pour transmettre des données dans ledit au moins un second réseau de communication sans fil,
détecter, à l'aide d'une unité de traitement de données (134, 234, 334), un événement de réseau prédéterminé (E) au sein dudit premier réseau de communication (110, 210, 310), où l'événement de réseau prédéterminé (E) indique une communication prioritaire imminente au sein du premier réseau de communication (110, 210), qui ne doit pas être gênée par des interférences provenant d'un second réseau sans fil (120, 220), où la détection comprend la réception d'un signal prédéterminé sur ledit premier réseau de communication (110, 210, 310) ;
b) au nœud de passerelle, générer un signal de balise (B) dès ladite détection, et le transmettre à au moins un nœud récepteur (122, 222, 322) du ou des seconds réseaux de communication sans fil (120, 220, 320) ;
c) audit nœud récepteur, ne comprenant pas de moyens de réception de données pour recevoir des données dans ledit premier réseau de communication, modifier la puissance de transmission pour communiquer avec des nœuds pairs dans le second réseau de communication sans fil (120, 220, 320) d'un premier niveau à un second niveau inférieur, lors de la réception dudit signal de balise ;
d) audit nœud récepteur, communiquer avec l'un quelconque des nœuds pairs dans ledit second réseau de communication sans fil en utilisant ledit second niveau inférieur de puissance de transmission.

2. La méthode selon la revendication 1, comprenant l'étape préliminaire de :
i) à un nœud de transmission (112, 212, 312) du premier réseau de communication (110, 210, 310), générer un premier signal de balise et le diffuser sur le premier réseau de communication ;
et où ladite détection d'un événement de réseau prédéterminé (E) à l'étape a) comprend la réception dudit premier signal de balise.

3. La méthode selon l'une des revendications 1 ou 2, où le premier réseau de communication (210) est configuré pour établir un canal de communication sécurisé et de confiance exclusivement entre ses nœuds (212), y compris ledit nœud de passerelle et
où le ou les seconds réseaux de communication sans fil (220) sont en outre configurés pour établir un canal de communication sécurisé et de confiance exclusivement entre ses nœuds (222), y compris ledit nœud de passerelle (230).

4. La méthode selon l'une quelconque des revendications 2 ou 3, où l'unité de traitement de données dudit nœud de passerelle (134, 234, 334) est configurée pour lire des données comprises dans ledit signal prédéterminé reçu sur un canal de communication sécurisé et de confiance dudit premier réseau de communication (110, 210, 310), et pour inclure lesdites données dans ledit signal de balise (B), pour transmission sur un canal de communication sécurisé et de confiance dudit au moins un second réseau de communication sans fil (120, 220, 320).

5. La méthode selon l'une quelconque des revendications 1 à 4, où ledit événement prédéterminé indique la présence d'un train circulant dans une zone prédéterminée à proximité d'un nœud (312) dudit premier réseau de communication (310).

6. La méthode selon l'une quelconque des revendications 1 à 5, où les nœuds du premier réseau de communication (110, 210, 310) sont configurés pour transmettre/recevoir des données dans une première gamme de fréquences, où les nœuds du ou des seconds réseaux de communication sans fil (120, 220, 320) sont configurés pour transmettre/recevoir des données dans au moins une seconde gamme de fréquences, et où lesdites première et seconde gammes de fréquences se chevauchent au moins partiellement.

7. La méthode selon l'une quelconque des revendications 1 à 6, où ledit signal de balise (B) comprend des données indiquant une durée, et où à l'étape d) le nœud récepteur (122, 222, 322) du second réseau de communication sans fil communique avec des nœuds pairs dans ledit réseau de communication (120, 220, 320) en utilisant ledit second niveau inférieur de puissance de transmission, uniquement pendant ladite durée, et/ou où ledit signal de balise (B) comprend des données indiquant une zone géographique, et où à l'étape d) le nœud récepteur (122, 222, 322) du second réseau de communication sans fil communique avec des nœuds pairs dans ledit second réseau de communication (120, 220, 320) en utilisant ledit second niveau inférieur de puissance de transmission, uniquement si ledit nœud récepteur est situé dans la zone géographique.

8. La méthode selon l'une quelconque des revendications 1 à 7, où ledit au moins un second réseau de communication sans fil comprend un réseau ad hoc connectant des véhicules automobiles.

9. La méthode selon l'une quelconque des revendications 1 à 8, où ledit premier réseau de communication comprend des nœuds situés le long d'une voie ferrée.

10. La méthode selon l'une quelconque des revendications 1 à 9 où la puissance de transmission audit nœud récepteur (122, 222, 322) est modifiée par une modification du cycle de service de transmission, par l'arrêt de la transmission pendant une durée prédéterminée, par une modification du taux de transmission des données, ou par toute combinaison des précédents.

11. Un système de communication (100, 200, 300) comprenant un premier réseau de communication (110, 210, 310) d'un premier type, au moins un second réseau de communication sans fil (120, 220, 320) d'un second type, et un nœud de passerelle (130, 230, 330) comprenant une unité de réception de données (131, 231, 331) pour recevoir des données dans ledit premier réseau de communication et une unité de transmission de données (132, 232, 332) pour transmettre des données dans ledit au moins un second réseau de communication sans fil, où une unité de traitement de données (134, 234, 334) dudit nœud de passerelle est configurée pour détecter un événement de réseau prédéterminé (E) au sein dudit premier réseau de communication (110, 210, 310), où l'événement de réseau prédéterminé (E) indique une communication prioritaire imminente au sein du premier réseau de communication (110, 210), qui ne doit pas être gênée par des interférences provenant d'un second réseau sans fil (120, 220), où la détection comprend la réception d'un signal prédéterminé sur ledit premier réseau de communication (110, 210, 310), et pour générer par la suite un signal de balise (B) et le transmettre à au moins un nœud récepteur du ou des seconds réseaux de communication sans fil (120, 220, 320), et où ledit nœud récepteur (122, 222, 322), ne comprenant pas de moyens de réception de données pour recevoir des données dans ledit premier réseau de communication, est configuré pour modifier la puissance de transmission pour communiquer avec l'un quelconque des nœuds pairs dans le second réseau de communication sans fil (120, 220, 320) d'un premier niveau à un second niveau inférieur, lors de la réception dudit signal de balise.

12. Le système de communication selon la revendication 11, où ledit premier réseau de communication (110, 210, 310), le ou les seconds réseaux de communication sans fil (120, 220, 320), et ledit nœud de passerelle (130, 230, 330) sont en outre configurés pour effectuer la méthode conformément à l'une quelconque des revendications 2 à 10.

13. Un programme informatique comprenant des moyens de code lisibles par ordinateur, qui, lorsqu'il est exécuté sur un système informatique, amène le système informatique à réaliser la méthode selon l'une quelconque des revendications 1 à 10.

14. Un produit de programme informatique comprenant un support lisible par ordinateur sur lequel le programme informatique selon la revendication 13 est stocké.
